## Europäisches Patentamt

## European Patent Office

## Office européen des brevets

(19)

(11) Veröffentlichungsnummer: **0 089 388**
**B1**

(12) **EUROPÄISCHE PATENTSCHRIFT**

(45) Veröffentlichungstag der Patentschrift:
**13.05.87**

(51) Int. Cl.⁴: **C 08 J 5/18,** C 08 L 23/04

(21) Anmeldenummer: **82102302.5**

(22) Anmeldetag: **20.03.82**

(54) **Extrudierbare Formmasse zur Herstellung von Kunststoffoilen geeignet für die Fertigung von Schutzbezügen.**

(43) Veröffentlichungstag der Anmeldung:
**28.09.83 Patentblatt 83/39**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**AU - A - 449 441**
**FR - A - 2 481 709**
**GB - A - 2 066 271**

**Die Akte enthält technische Angaben, die nach dem Eingang der Anmeldung eingereicht wurden und die nicht in dieser Patentschrift enthalten sind.**

(73) Patentinhaber: **Horn, Jörg, Sechsschimmelgasse 8/30, A-1090 Wien (AT)**

(72) Erfinder: **Horn, Jörg, Sechsschimmelgasse 8/30, A-1090 Wien (AT)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

ACTORUM AG

## Beschreibung

Die Erfindung betrifft eine extrudierbare, thermoplastische Formmasse zur Herstellung von Kunststoffolien, wie sie für die Fertigung von Schon- oder Schutzbezügen, insbesondere für Fahrzeuge und Fahrzeugteile benutzt werden und zeigt gleichzeitig das Verfahren zur Herstellung dieser Formmasse sowie den aus der Kunststoffolie hergestellten Schon- oder Schutzbezug. Solche Schutzbezüge aus üblicher Kunststoffolie, meist aus reinem Hochdruckpolyäthylen oder reinem Niederdruckpolyäthylen werden beispielsweise in Werkstätten oder Lagern zum Abdecken von Fahrzeugsitzen, Lenkrädern, Fahrzeugrädern oder ganzen Fahrzeugen oder auch für Polstermöbel usw. gebraucht, um diese vor Verschmutzung zu schützen und nach Gebrauch vernichtet zu werden. Sie haben zahlreiche Mängel, die deren Verwendung erheblich beeinträchtigen. Einmal muss die Schutzbezugsgrösse der jeweiligen Form und Abmessung des abzudeckenden Gegenstandes angepasst sein, d.h. es wird in jedem Betrieb eine grosse Anzahl verschiedener Schutzbezüge benötigt, was die Lagerhaltung erheblich vergrössert. Zum anderen sind die bekannten Schutzbezüge kaum mechanisch beanspruchbar und zerreissen sehr leicht. Schliesslich ist das verwendete Folienmaterial verhältnismässig dick und materialaufwendig, was die Handhabung der Bezüge erschwert sowie deren Gewicht und damit auch deren Preis erhöht.

Aufgabe der Erfindung ist es, alle diese Mängel zu beheben und für die Herstellung aller Arten von Schon- und Schutzbezügen eine Kunststoffolie zu schaffen, die von sehr geringer Dicke und bei höchster mechanischer Beanspruchbarkeit so stark dehnbar ist, dass die daraus hergestellten Schutzbezüge sich ohne nennenswerten Kraftaufwand und ohne zu zerreissen über die verschiedensten Formen und Abmessungen von Gegenständen hinwegziehen und anpassen lassen, so dass durch einen straffen Sitz des Folienmaterials ein optimaler Schutz erreicht wird, der auch beim Gebrauch des Schutzbezuges z.B. während einer Kraftfahrzeugreparatur voll erhalten bleibt.

Dies wird erfindungsgemäss dadurch erreicht, dass die extrudierbare, thermoplastische Formmasse zur Herstellung von Kunststoffolien eine Kombination verschiedener Polyäthylene und Oleamide und einiger weiterer Komponenten umfasst und sich zusammensetzt aus:

1. mindestens 45 Gew.% linearem Polyäthylen (LLDPE)
2. 10 bis 50 Gew.% Hochdruckpolyäthylen (LDPE)
3. 0,5 bis 10 Gew.% Niederdruckpolyäthylen (HDPE)
4. 0,1 bis 5 Gew.% Oleamide oder Erucamide und natürliche Silika und
5. bis etwa 5 Gew.% Fettsäureester, Farbstoffe, synthetische Kieselsäure, Stabilisatoren und Verarbeitungshilfsmittel,

wobei die Summe aus 1. bis 5. jeweils 100 Gew.% beträgt.

Das Verfahren zur Herstellung von Folien aus dieser Formmasse kennzeichnet sich dadurch, dass die Mischung der aufgeführten Mischungsbestandteile in an sich bekannter Weise in einem Komponentenmischer erfolgt, anschliessend plastifiziert und zu einer hochdehnbaren, gleitfähigen Folie geringster Dicke extrudiert wird, welche sich durch eine gewisse Griffestigkeit und Steife auszeichnet, die eine hervorragende Öffnung des Folienschlauches erlaubt und dadurch erst eine praktikable Verwendung der hauchdünnen Folie ermöglicht.

Die erfindungsgemässe Folie ist sehr stark dehnbar, etwa um 20 bis 50% ihrer Abmessung und bis zur geringsten Dicke herunter, etwa bis zu 8 µm, extrudierbar. Sie hat aber in jedem Fall immer noch die erforderliche Steifigkeit, um eine Griffestigkeit zu gewährleisten, die die Voraussetzung für die praktische Verwendbarkeit bildet.

Aus der erfindungsgemässen Folie lassen sich dünne, leicht zu handhabende Schutzbezüge in einer Abmessung herstellen, die sich über Objekte verschieden grosser Abmessung und Form hinwegziehen lassen und dabei kaum zerreissbar sind. Damit ist die Lagerhaltung an Schutzbezügen in Werkstätten sehr vereinfacht. Der reine Materialaufwand für die Folie ist erheblich herabgesetzt, was allein schon eine Energieeinsparung erbringt. Es ist aber nicht nur Material, sondern auch an Transportgewicht gespart, was eine Preisreduzierung gegenüber üblichen Folien gestattet. Dementsprechend ist ein aus einer solchen Kunststoffolie hergestellter Schon- oder Schutzbezug, insbesondere für Fahrzeugsitze und andere Fahrzeugteile oder auch für ganze Fahrzeuge dadurch gekennzeichnet, dass die Folie stark dehnbar – etwa um 20 bis 50% ihrer Abmessung – ist und eine geringe Dicke bis herunter auf etwa 8 µm besitzt.

Um die Lagerhaltung und die Handhabung der erfindungsgemässen Schon- und Schutzbezüge, insbesondere aber deren Vorratshaltung, zu vereinfachen, wird bei der Fertigung so verfahren, dass ein Folienschlauch in einer sich über eine Vielzahl von Schutzbezügen hinwegerstreckenden Länge extrudiert und der Länge nach aufgeschnitten wird. Darauf werden die beiden nunmehr flach aufeinanderliegenden Bahnenhälften durch im Abstand einer Schutzbezugslänge hintereinanderliegende, quer verlaufende Schweissnähte mit Kaltperforation oder sog. Trennschweissnähte miteinander verbunden. Nunmehr kann eine Längsfaltung dieses Schlauchrohlings und das Aufwickeln zu einer Vorratsrolle erfolgen, von der bei Bedarf einzelne Schutzbezüge leicht längs der quer verlaufenden Schweissnähte bzw. Perforationen abtrennbar sind.

Der Erfindungsgedanke lässt die verschiedensten Ausführungsmöglichkeiten zu, eine davon soll im folgenden anhand der Zeichnungen erläutert werden, und zwar zeigen:

Fig. 1 eine schematische Darstellung über die Bildung einer Vorratsrolle für Schutzbezüge aus einem extrudierten Folienschlauch,

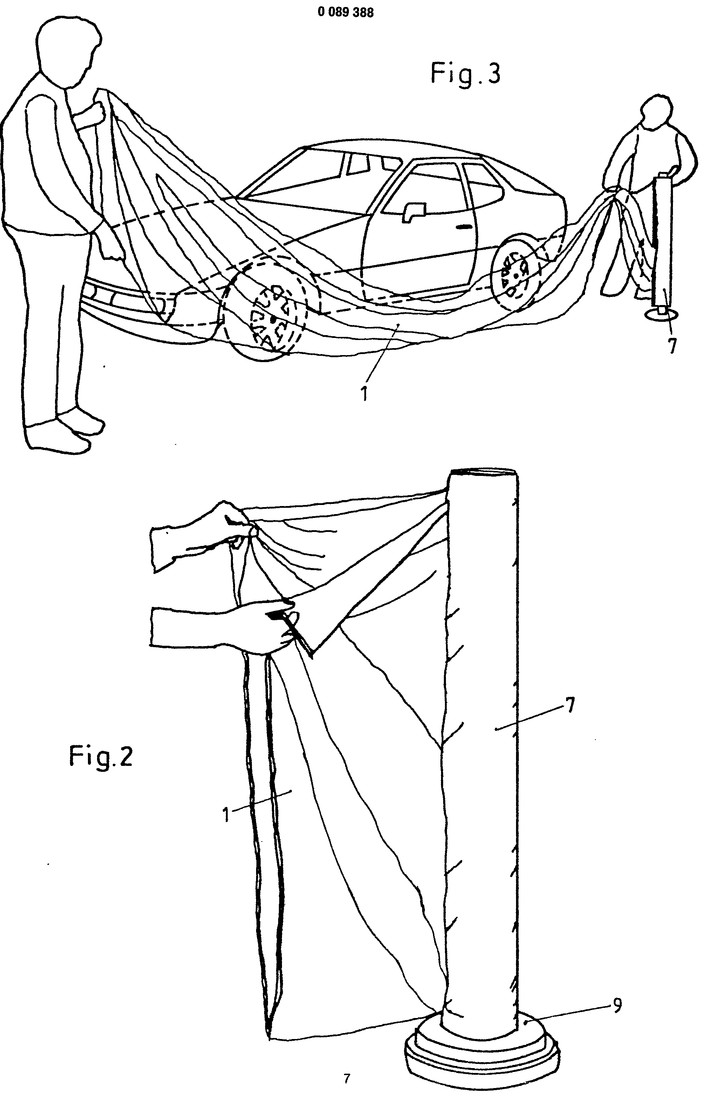

Fig. 2 eine Darstellung einer teilweise abgewikkelten Vorratsrolle und

Fig. 3 bis 5 Darstellungen über den Gebrauch eines von der Vorratsrolle gemäss Fig. 2 abge-trennten Schutzbezuges zur vollständigen Abdek-kung eines Fahrzeuges.

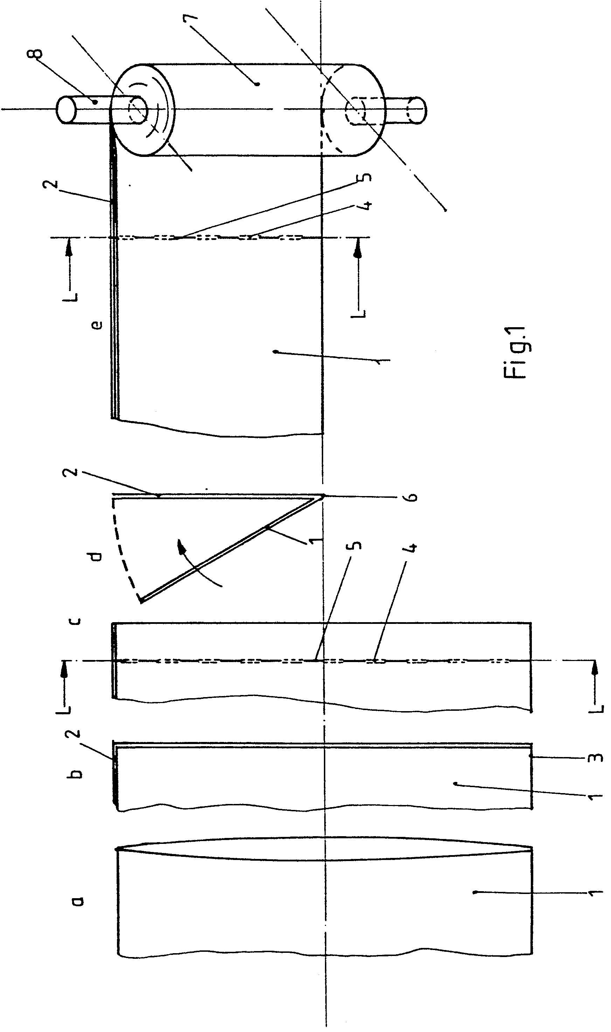

Aus der in der Beschreibungseinleitung und den Ansprüchen angegebenen Mischung von ver-schiedenen Polyäthylensorten, Oleamiden, Fett-säureester, Farbstoffen, Stabilisatoren usw. wird durch den Extruder ein sehr dünnwandiger und hochdehnbarer Folienschlauch 1 erzeugt (Position a in Fig. 1). Dieser wird flachgelegt und an einer Seite der Länge nach bei 2 aufgeschlitzt, so dass nur noch eine Biegekante 3 verbleibt (Position b in Fig. 1). Nunmehr werden querverlaufende Schweissnähte 4 und Perforationen 5 im Abstand jeweils einer Schutzbezugslänge «L» vorgesehen (Position c in Fig. 1). Darauf erfolgt nochmals eine Längsfaltung 6 in der Mitte des Schlauchrohlings (Position d in Fig. 1). Schliesslich wird dieser zu einer Rolle 7 auf einer Achse 8 aufgewickelt (Position e in Fig. 1). Die querverlaufenden Schweissnähte 4, 5 können in der verschiedensten Weise, beispielsweise als sog. Trennschweissnähte oder als Schweissnähte mit Kaltperforation, ausgeführt sein.

Die auf diese Weise gebildete Vorratsrolle 7 kann je nach Grösse der jeweiligen Schutzbezüge beliebig sein. Bei Schutzbezügen für ganze Fahrzeuge lassen sich leicht 25 bis 100 Schutzbezüge in einer Rolle 7 vereinen und bei Gebrauch nacheinander von dieser abtrennen. Sind dagegen nur Schutzbezüge für Fahrzeugsitze vorgesehen, so lassen sich bis zu 1000 Stück derartiger Bezüge auf einer Rolle aufwickeln. Da die Kunststoffolie sehr dünn ist, etwa 10 µm oder noch weniger, ist das Gewicht einer solchen Vorratsrolle trotz der grossen Anzahl der aufgewickelten Schutzbezüge relativ gering.

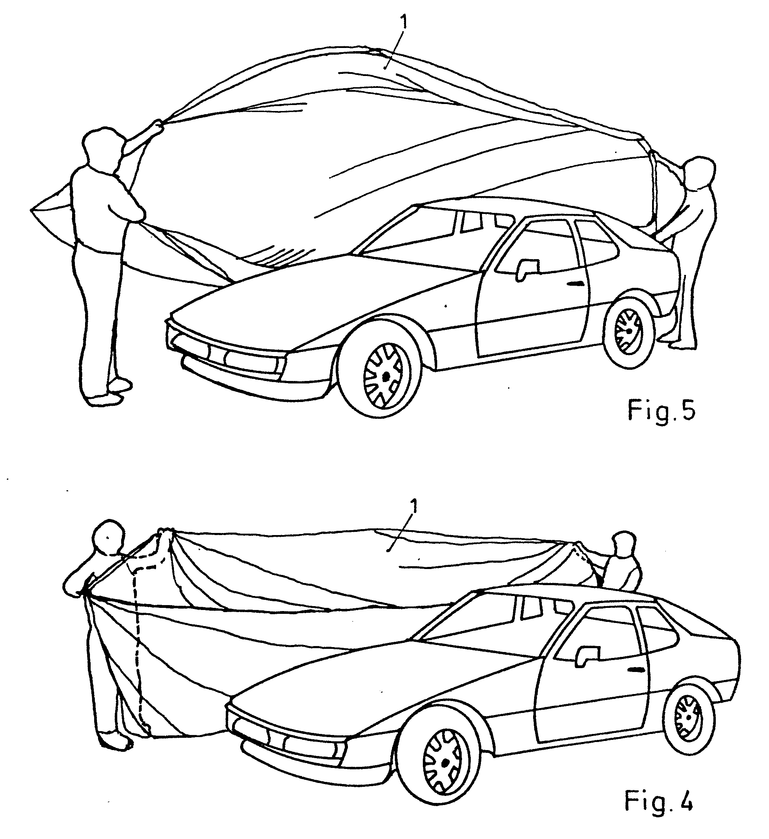

Für den Gebrauch wird die Vorratsrolle 7 mit ihrer Achse 8 beispielsweise senkrecht auf einen Sockel 9 gesteckt. Davon können die einzelnen Schutzbezugslängen leicht abgezogen und im Bereich der Perforation 4, 5 abgetrennt werden, wie dies in Fig. 3 gezeigt ist. Mit der offenen Seite nach oben gekehrt, gemäss Fig. 4, wird dann der Schutzbezug über das ganze Fahrzeug hinweggezogen, wie es in Fig. 5 gezeigt ist. Infolge der starken Dehnbarkeit, etwa 20% bis 50%, lässt sich der Schutzbezug über die verschiedensten Ab-messungen von Fahrzeugen hinwegziehen. Ähnli-ches trifft zu, wenn der Schutzbezug lediglich von geringerer Abmessung und für Fahrzeugsitze, Möbel oder andere Gegenstände bestimmt ist. Eine Grösse von Schutzbezügen lässt sich jeweils über verschieden grosse Fahrzeugteile oder andere Gegenstände hinwegziehen. Die grosse Dehnbarkeit der gleitfähigen Folie gestattet jedes Abdecken beliebig grosser Teile, ohne dass die Folie etwa reisst oder anderweitig beschädigt wird. Das Aufwickeln auf Vorratsrollen erleichtert sowohl die Lagerhaltung, als auch Transport und Versand der Schutzbezüge.

**Patentansprüche**

1. Extrudierbare, thermoplastische Formmasse zur Herstellung von Kunststoffolien für die Fertigung von Schon- und Schutzbezügen, insbesondere für Fahrzeuge und Fahrzeugteile, dadurch gekennzeichnet, dass sie eine Kombination verschiedener Polyäthylene und Oleamide enthält und sich zusammensetzt aus:

   1. mindestens 45 Gew.% linearem Polyäthylen (LLDPE)
   2. 10 bis 50 Gew.% Hochdruckpolyäthylen (LDPE)
   3. 0,5 bis 10 Gew.% Niederdruckpolyäthylen (HDPE)
   4. 0,1 bis 5 Gew.% Oleamide oder Erucamide und natürliche Silika und
   5. bis etwa 5 Gew.% Fettsäureester, Farbstoffe, synthetische Kieselsäure, Stabilisatoren und Verarbeitungshilfsmittel,

wobei die Summe aus 1. bis 5. jeweils 100 Gew.% beträgt.

2. Verfahren zur Herstellung einer Folie für die Fertigung von Schon- und Schutzbezügen aus ei-ner extrudierbaren, thermoplastischen Formmas-se gemäss Anspruch 1, dadurch gekennzeichnet, dass die Mischung der in Anspruch 1 aufgeführten Mischungsbestandteile in an sich bekannter Weise in einem Komponentenmischer erfolgt, anschliessend plastifiziert und zu einer hochdehnbaren, griffesten, gleitfähigen Folie mit hoher Durchstossfestigkeit sowie geringster Dicke extrudiert wird.

3. Ein aus der Kunststoffolie gemäss den Ansprüchen 1 und 2 hergestellter Schon- oder Schutzbezug, insbesondere für Fahrzeuge und Fahrzeugteile, dadurch gekennzeichnet, dass die Folie etwa um 20% bis 50% ihrer Abmessung dehnbar, griffest und von bestimmter Steifigkeit ist und eine sehr geringe Dicke bis herunter auf etwa 8 µm besitzt.

4. Verfahren nach Anspruch 2, dadurch gekennzeichnet, dass ein Folienschlauch mindestens in einer sich über eine Vielzahl von Schutzbezügen hinwegerstreckenden Länge extrudiert und an einer Seite der Länge nach aufgeschnitten wird, worauf die beiden nunmehr aufeinanderliegenden Bahnenteile durch im Abstand einer Schutzbe-zugslänge hintereinanderliegende Schweissnäh-te und Perforierung auftrennbar miteinander verbunden werden.

5. Verfahren nach Anspruch 4, dadurch gekennzeichnet, dass der Schlauchrohling nach Anbringung der Schweissnähte und Perforierungen der Länge nach umgefaltet und zu einer Vorratsrolle aufgewickelt wird, von der bei Bedarf einzelne Schutzhüllen abtrennbar sind.

6. Ein gemäss Anspruch 5 hergestellter Vorratsstapel aus Schutz- und Schonbezügen, gekennzeichnet durch eine längsgefaltete, sich über eine Vielzahl von Schutzbezügen hinwegerstreckende Folienbahn, die in Abständen jeweils einer Schutzbezugslänge querverlaufende Schweissnähte und Perforationen aufweist und zu einer Vorratsrolle aufgewickelt ist.

## Claims

1. Extrudable, thermoplastic moulding compound for the manufacture of synthetic films for making protective covers, particularly for vehicles and vehicle parts, characterised in that it contains a combination of various polyethylenes and oleamides and is composed of:
   1. at least 45% weight linear polyethylene (LLDPE)
   2. 10 to 50% weight high pressure polyethylene (LDPE)
   3. 0.5 to 10% weight low pressure polyethylene (HDPE)
   4. 0.1 to 5% weight oleamides or erucamides and natural silica and
   5. up to around 5% fatty acid ester, colourants, synthetic silicic acid, stabilizers and auxiliary products

   the sum of 1 to 5 being 100% weight.

2. Method of producing a film for making protective covers from an extrudable, thermoplastic moulding compound according to claim 1, characterised in that the mixing of the constituent parts shown in Fig. 1 is carried out in a known way in a constituent mixer, it is then plasticized and extruded to a highly extensible, grip-tight, sliding sheet with a high resistance to puncturing as well as having a minimal thickness.

3. A protective cover made of the synthetic sheet according to claims 1 and 2, particularly for vehicles and vehicle parts, characterised in that the sheet can be extended by 20 to 50% of its size, is grip-tight and of a certain rigidity, and has a very small thickness down to approximately 8 µm.

4. Method according to claim 2, characterised in that a tube of film is extruded in a length extending over a number of protective covers and is cut lengthwise along one side, the two superimposed strips being joined by successive welded seams and perforations at intervals of one protective cover length.

5. Method according to claim 4, characterised in that after welding and perforation the tube blank is folded along its length and rolled into a storage roll, from which individual protective covers can be detached as required.

6. A stack of protective covers manufactured according to claim 5, characterised in that a longitudinally folded strip of film extending over a number of protective covers, has transverse welded seams and perforations at intervals corresponding to the length of the covers and is rolled up into a storage roll.

## Revendications

1. Masse de moulage thermoplastique extrudable pour la production de feuilles de matière plastique pour la fabrication de housses de protection en particulier pour véhicules et parties de véhicules, caractérisée par le fait qu'elle contient une combinaison de différents polyéthylènes et oléamides et se compose de:
   1. au moins 45% en poids de polyéthylène linéaire (LLDPE)
   2. 10 à 50% en poids de polyéthylène haute pression (LDPE)
   3. 0,5 à 10% en poids de polyéthylène basse pression (HDPE)
   4. 0,1 à 5% en poids d'oléamides ou d'érucamides et des silices naturelles, et
   5. jusqu'à environ 5% en poids d'esters d'acides gras, de colorants acide silicique de synthèse, de stabilisants et d'auxiliaires de fabrication,

   la somme de 1. à 5. étant dans chaque cas de 100% en poids.

2. Procédé pour la fabrication d'une feuille pour la fabrication de housses de protection à partir d'une masse de moulage thermoplastique extrudable selon la revendication 1, caractérisé par le fait que le mélange des composants énumérés dans la revendication 1 est réalisé, de façon connue en soi, dans un mélangeur de composants, puis plastifié et extrudé en une feuille très extensible, résistante à la résistance de la manipulation, glissante, avec une grande résistance au perçage ainsi qu'une très faible épaisseur.

3. Housse de protection fabriquée à partir de la feuille de matière plastique selon les revendications 1 ou 2, en particulier pour véhicules et parties de véhicules, caractérisée par le fait que la feuille est extensible d'environ 20% à 50% de sa dimension, résistante à la manipulation et d'une certaine raideur, et a une épaisseur pouvant descendre jusqu'à environ 8 µm.

4. Procédé selon la revendication 2, caractérisé par le fait qu'une feuille tubulaire est extrudée au moins dans une longueur s'étendant sur un grand nombre de housses de protection et coupé d'un côté dans le sens de la longueur, puis les deux bandes alors superposées sont réunies par des lignes de soudure et des perforations, disposées l'une derrière l'autre avec un écart d'une longueur de housse de protection, de façon à pouvoir être détachées.

5. Procédé selon la revendication 4, caractérisé par le fait que l'ébauche tubulaire est repliée dans le sens de la longueur après exécution des lignes de soudure et des perforations et enroulée en un rouleau de réserve, duquel on détache, lors des besoins, des enveloppes de protection individuelles.

6. Réserve de housses de protection selon la revendication 5, caractérisé par une bande de feuille pliée dans la longueur, s'étendant sur un grand nombre de housses de protection, qui présente des soudures et des perforations transversales, écartées de la longueur d'une housse de protection, et est enroulée en un rouleau de réserve.

Fig.1

0 089 388

Fig.3

Fig.2

Fig. 5

Fig. 4